(19) Europäisches Patentamt
European Patent Office
Office européen des brevets

(11) Publication number: 0 011 362 B1

(12) **EUROPEAN PATENT SPECIFICATION**

(45) Date of publication of patent specification: 20.10.82

(51) Int. Cl.³: C 01 B 33/28

(21) Application number: 79302002.5

(22) Date of filing: 26.09.79

(54) **Method for synthesis of zeolite ZSM-5.**

(30) Priority: 13.11.78 US 960158

(43) Date of publication of application: 28.05.80 Bulletin 80/11

(45) Publication of the grant of the patent: 20.10.82 Bulletin 82/42

(84) Designated Contracting States: DE GB NL

(56) References cited:
DE - A - 2 817 576
DE - A - 2 822 725
GB - A - 1 365 318
GB - A - 1 471 440
US - A - 3 702 886
US - A - 3 947 482
US - A - 4 112 056

(73) Proprietor: MOBIL OIL CORPORATION
150 East 42nd Street
New York New York 10017 (US)

(72) Inventor: Dwyer, Francis Gerard
1128 Talleyrand Road
West Chester Pennsylvania 19380 (US)
Inventor: Chu, Pochen
1173 Ollerton Road
West Deptford New Jersey 08066 (US)

(74) Representative: Cooper, John Anthony et al,
Mobil Court 3 Clements Inn
London WC2A 2EB (GB)

EP 0 011 362 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method for synthesis of zeolite ZSM-5

The present invention relates to a method for synthesis of zeolite ZSM-5.

Zeolite ZSM-5 in its conveniently synthesized aluminosilicate form has the composition, expressed in mole ratios of oxides in the anhydrous state:

$$0.9\mp0.2\ M2/nO:Al_2O_3:xSiO_2$$

wherein M is selected from tetraalkylammonium cations, the alkyl groups of which contain 2—5 carbon atoms, and alkali metal cations (especially sodium), and x is at least 5, said cations having the valence n. It has a distinctive X-ray diffraction pattern. Its original cations can be exchanged to confer exceptional catalytic properties. The zeolite and its conventional preparation are the subject of U.S. Specification 3,702,886.

Zeolite ZSM-5 has been conventionally prepared by forming a mixture of alumina, silica, alkali metal oxide, water and tetraalkylammonium compounds such that the mixture has a composition, in terms of mole ratios of oxides, falling within the following range:

| | |
|---|---|
| $SiO_2/Al_2O_3$ | 5—100 |
| $H_2O/SiO_2$ | 0.7—3000 |
| $M/SiO_2$ | 0.3—3.0 |
| $R/SiO_2$ | 0.01—2.0 |

wherein M is an alkali metal ion and R is a tetraalkylammonium cation, the alkyl groups of which contain 2—5 carbon atoms. The reaction mixture is maintained at a temperature of from 38°C (100°F) to 204°C (400°F) until crystals of ZSM-5 are formed.

Particular techniques of interest for the synthesis of this zeolite are disclosed in GB 1,365,318, according to which the zeolite is synthesised by preparing an initial mixture which comprises a tertiary amine (n-tri-propylamine) and a C1—C6 alkylhalide (n-propylbromide) and reacting at about 149°C (300°F); and in GB 1,471,440, which discloses a method for the manufacture of a ZSM-5 zeolite having a low sodium level (<0.20% by weight) wherein the reaction mixture comprises a C1—C6 alkylamine.

Zeolite ZSM-5 possesses a definite distinguishing crystalline structure whose X-ray diffraction pattern shows the following significant lines:

TABLE I

| Interplanar Spacing | Relative Intensity |
|---|---|
| 11.1±0.3 | S |
| 10.0±0.3 | S |
| 7.4±0.2 | W |
| 7.1±0.2 | W |
| 6.3±0.2 | W |
| 6.04±0.2 | W |
| 5.56±0.1 | W |
| 5.01±0.1 | W |
| 4.60±0.08 | W |
| 4.25±0.08 | W |
| 3.85±0.07 | VS |
| 3.71±0.05 | S |
| 3.04±0.03 | W |
| 2.99±0.02 | W |
| 2.94±0.02 | W |

These values were determined by standard technique. The radiation was the K-alpha doublet of copper, and a scintillation counter spectrometer with a strip chart open recorder was used. The peak heights, I, and the positions as a function of 2 times theta, where theta is the Bragg angle, were read from the spectrometer chart. From these, the relative intensities, $100I/I_o$ is the intensity of the strongest line or peak, and d (obs.), the interplanar spacing in A, corresponding to the recorded lines, were calculated. In Table I the relative intensities are given in terms of the symbols W=weak, S=strong and VS=very strong. It should be understood that this X-ray diffraction pattern is characteristic of all the species of ZSM-5 zeolites. Ion exchange of the sodium ion with cations reveals substantially the same pattern with some minor shifts in interplanar spacing and variation in relative intensity. Other minor variations can occur depending on the silicon to aluminum ratio of the particular sample, as well as if it has been subjected to thermal treatment.

According to the present invention a method for synthesis of zeolite ZSM-5 having a sodium content of 0.01 to 0.20% by weight comprises preparing a mixture containing sources of an alkali metal oxide, of an aluminum oxide, of a silicon oxide, a $C_1$—$C_6$ primary alkylamine, a $C_1$—$C_6$ alkyl halide and a solvent for amine and halide, the mole ratio of amine to halide being from 2:1 to 10:1, said mixture having a composition, in mole ratios, within the following ranges:

| | |
|---|---|
| $SiO_2/Al_2O_3$ | 5—1000 |
| $H_2O/SiO_2$ | 5—200 |
| $M/SiO_2$ | 0.01—3.0 |
| $R/SiO_2$ | 0.01—2.0 |

wherein R is alkyl from both amine and halide and M is an alkali metal or an alkaline earth cation, and reacting at from 38°C (100°F) to 204°C (400°F). The alkyls of the amine and halide may be different or the same, and in the latter case are preferably both propyl. An excellent solvent for both amine and halide is 2-butanone. The duration of the synthesis is usually from 3 hours to 180 days.

The said mixture has preferred and most preferred constitutions, as set forth below:

| | Preferred | Most Preferred |
|---|---|---|
| $SiO_2/Al_2O_3$ | 10—500 | 20—200 |
| $H_2O/SiO_2$ | 10—100 | 15—60 |
| $M/SiO_2$ | 0.1—2.0 | 0.2—2.0 |
| $R/SiO_2$ | 0.05—1.0 | 0.1—1.0 |

The amine and halide can be added to the reaction mixture as such or precombined. The solvent may be any that dissolves both the reactants and the product. In practice, however, it should be easily retained in the mixture at the temperature of crystallization and should not be so high-boiling as to be difficult to remove. The reaction mixture is maintained at a temperature of from 38°C (100°F) to 204°C (400°F) for from 3 hours to 180 days until crystals of ZSM-5 are formed. Preferred conditions comprise a temperature from 82°C (180°F) to 177°C (350°F) for from 3 hours to 30 days.

The digestion of the gel particles is carried out until no further crystals form. The solid product is separated from the reaction medium, as by cooling the whole to room temperature, filtering and water washing.

In addition to providing a low-sodium ZSM-5 (i.e. from about 0.01 or less to about 0.20%) which can be used as a catalyst without intermediate exchange, it is interesting to note that the present method of preparation of ZSM-5 also provides the benefit of being lower in cost than the conventional preparation technique since the organic materials used are substantially cheaper than the conventional ones.

The invention provides another advantage not apparent from the prior art. ZSM-5 prepared using conventional tetraalkylammonium cations has a small crystal size, of the order of about 0.02 micron to about 20 microns. Previous attempts to use cheaper organic materials in its synthesis, such as primary amines, yielded ZSM-5 having low sodium content but large crystals. Since it is desirable for many purposes to have small crystal ZSM-5, it is advantageous that the low sodium feature is retained and also that desirably small crystals, i.e., from about 0.05 micron to about 20 microns are obtained. This is attained by using a ratio of amine to halide of from 2:1 to 10:1.

The reaction mixture for the synthesis of the zeolite can be prepared from materials which can supply the appropriate oxide. Such materials include aluminates, alumina, silicates, silica hydrosol, silica gel, silicic acid and hydroxides. It will be understood that each oxide component can be supplied by one or more essential reactants and they can be mixed together in any order. For example, any oxide can be supplied by an aqueous solution, sodium hydroxide or by an aqueous solution of a suitable silicate; organic nitrogen-containing cation can be supplied by a compound of that cation, such as, for example, a salt. The reaction mixture can be prepared either batch wise or continuously. Crystal size and crystallization time will vary with the nature of the reaction mixture employed.

Even though the presently prepared ZSM-5 has a low content of alkali metal ions as synthesized, and therefore may be utilized as catalytic material for a number of hydrocarbon conversion reactions substantially as synthesized, the original cations of the as synthesized ZSM-5 can be replaced in accordance with techniques well known in the art, at least in part, by ion exchange with other cations. Preferred replacing cations include metal ions, ammonium ions, hydrogen ions and mixtures thereof. Particularly preferred cations are those which render the zeolite catalytically active especially for hydrocarbon conversion. These include hydrogen, rare earth metals, aluminum, metals of Groups IIA, IIIB, IVB, VIB, VIII, IB, IIB, IIIA, IVA. Of the replacing metallic cations, particular preference is given to cations of metals such as rare earth, Mn, Ca, Mg, Zn, Cd, Pd, Ni, Co, Ti, Al, Sn, Fe and Co.

A typical ion exchange technique involves contacting the synthetic ZSM-5 zeolite with a salt of the desired replacing cation or cations. Although a wide variety of salts can be employed, particular preference is given to chlorides, nitrates and sulfates. Representative ion exchange techniques are

disclosed in a wide variety of patents including United States Patents 3,140,249; 3,140,251; and 3,140,253.

Following contact with the salt solution of the desired replacing cation, the zeolite is then preferably washed with water and dried at a temperature ranging from 66°C (150°F) to about 316°C (600°F) and thereafter may be calcined in air or other inert gas at temperatures ranging from about 260°C (500°F) to 816°C (1500°F) for periods of time ranging from 1 to 48 hours or more to produce a catalytically-active thermal decomposition product thereof.

Regardless of cation replacement the spatial arrangement of the aluminum, silicon and oxygen atoms which form the basic crystal lattice of ZSM-5 remains essentially unchanged, as confirmed by the X-ray powder diffraction pattern of the ion-exchanged material.

ZSM-5 prepared by the present method may be used in a wide variety of organic compound conversion processes, e.g. hydrocarbon compounds and oxygenates such as methanol. Such processes include, for example, alkylation of aromatics with olefins, aromatization of normally gaseous olefins and paraffins, aromatization of normally liquid low molecular weight paraffins and olefins, isomerization of aromatics, paraffins and olefins, disproportionation of aromatics, transalkylation of aromatics, oligomerization of olefins and cracking and hydrocracking. All of the foregoing catalytic processes are of value since they result in upgrading of the organic charge being processed.

ZSM-5 prepared in accordance herewith can be used either in the organic nitrogen-containing form, the alkali metal form, the hydrogen form or another univalent or multivalent cationic form. They can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith. Such components can be impregnated in or on to ZSM-5 such as, for example, by, in the case of platinum, treating the zeolite with a platinum metal-containing ion. Thus, suitable platinum compounds for this purpose include chloroplatinic acid, platinous chloride and various compounds containing the platinum amine complex. Combinations of metals and methods for their introduction can also be used.

Catalysts containing ZSM-5 prepared according to the invention can be prepared in many forms, such as powders, granules or molded products such as extrudate having particle size sufficient to pass through a 2 mesh (Tyler) screen and be retained on a 400 mesh (Tyler) screen. The catalyst can be extruded before drying or partially dried and then extruded.

As in the case of many other catalysts, it can be desirable, to composite the ZSM-5 hereby prepared with another material resistant to the temperatures and other conditions employed in organic conversion processes. Such matrix materials include active and inactive materials and synthetic or naturally occurring zeolites as well as organic materials such as clays, silica and/or metal oxides. The latter may be either naturally occurring or in the form of gelatinous precipitates, sols or gels including mixtures of silica and metal oxides. Use of an active material tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. Frequently, zeolite materials have been incorporated into naturally occurring clays, e.g., bentonite and kaolin. These materials, i.e. clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the hereby synthesized ZSM-5 catalyst include the montmorillonite and kaolin family, which families include the sub-bentonites, and the kaolins commonly known as Dixie, McNamee, Georgia and Florida clays or others in which the main mineral constituent is halloysite, kaolinite, dickite, nacrite, or anauxite. Such clays can be used in the raw state or initially subjected to calcination, acid treatment or chemical modification.

In addition to the foregoing materials, the ZSM-5 catalyst hereby synthesized can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The matrix can be in the form of a cogel. A mixture of these components could also be used. The relative proportions of finely divided crystalline aluminosilicate ZSM-5 and inorganic oxide gel matrix vary widely with the crystalline aluminosilicate content ranging from about 1 to about 90 percent by weight and more usually in the range of about 2 to about 50 percent by weight of the composite.

In employing the ZSM-5 catalyst of this invention for polymerization of olefin containing liquid or gaseous charge stocks, such charge stocks can be polymerized at temperatures between 288 (550) and 454°C (850°F) at an hourly space velocity of between 0.5 and 50 WHSV and a pressure between 10.2 (0.1) and 5617 kPa (800 psig).

In employing the catalyst of the present invention for aromatization of gaseous or liquid charge stocks which may be olefinic or paraffinic with or without aromatics present, such stocks can be

aromatized at temperatures between 427 (800) and 649°C (1200°F) and pressures from 1 to 10 atmospheres and space velocities between 0.1 and 10 WHSV.

In order to more fully illustrate the nature of the invention and the manner of practicing same, the following examples are presented.

Examples 1—5

In all crystallizations, the silicate and acid alum solutions were charged simultaneously through a nozzle into an autoclave equipped with high shear agitation and excellent temperature control. The resulting gels were well-mixed before any organics were added. Crystallization temperatures were 93—104°C (200—220°F) for first stage crystallization. When a crystallinity of at least 65% was reached, the temperature was raised to 160°C (320°F) for the remainder of the crystallization. The temperature sequence was designed to permit extensive nucleation with low crystal growth rate at the low temperature followed by rapid completion of crystal growth at high temperature.

Table II summarizes the data obtained.

TABLE II

| Example | 1 | 2 | 3 | 4 | 5 |
|---|---|---|---|---|---|
| Molar Composition of Charge | | | | | |
| $Al_2O_3$ | 1.0 | 1.0 | 1.0 | 1.0 | 1.0 |
| $SiO_2$ | 81.3 | 81.3 | 81.3 | 81.2 | 81.2 |
| Na | 104.1 | 104.1 | 104.1 | 104.1 | 104.1 |
| n-propyl amine | 24.3 | 24.3 | 24.3 | 32.3 | 32.3 |
| n-propyl bromide | 4.03 | 4.03 | 4.03 | 5.36 | — |
| 2-butanone | 13.3 | 13.3 | 13.3 | 13.3 | — |
| $H_2O$ | 1736 | 1736 | 1736 | 1736 | 1736 |
| Crystallization | | | | | |
| Pre-reaction | | | | | |
| Temp. °C | 104 | 104 | 104 | 104 | — |
| Time, Hrs. | 6.0 | 6.0 | 6.0 | 6.0 | — |
| Agitation, rpm | 0 | 0 | 0 | 0 | — |
| First Stage Crystallization | | | | | |
| Temp. °C | 104 | 106 | 103 | 104 | 104 |
| Time, Hrs. | 162 | 88.5 | 132 | 137 | 124 |
| Agitation, rpm | 250 | 250 | 90 | 90 | 90 |
| Second Stage Crystallization | | | | | |
| Temp. °C | — | — | 160 | 160 | 160 |
| Time, Hrs. | — | — | 4.5 | 1.0 | 1.0 |
| Agitation, rpm | — | — | 90 | 90 | 90 |
| Product Data | | | | | |
| Crystallinity, % | 95 | 95 | 100 | 85 | 90 |
| Crystal Size, (micron) | 0.03 | 0.03 | 0.05 | 0.05 | 0.15 |
| Mole Ratio of Product (dialyzed) | | | | | |
| $SiO_2/Al_2O_3$ | 76.7 | 68.9 | 67.8 | 67.6 | 76.2 |
| $NaAl_2O_3$ (washed) | 0.47 | 0.18 | 0.04 | 0.04 | 0.04 |
| (Na,% Wt.) | 0.22 | 0.12 | 0.02 | 0.02 | 0.02 |
| $N/Al_2O_3$ | 3.72 | 3.72 | 4.72 | 2.37 | 6.89 |
| $C/Al_2O_3$ | 18.25 | 20.09 | 22.11 | 19.91 | 23.83 |
| Adsorption | | | | | |
| $H_2O$,% Wt. | 5.1 | 5.7 | 6.5 | 9.2 | 9.3 |
| $C_yC_6$ | 6.0 | 4.6 | 5.8 | 6.3 | 9.3 |
| $nC_6$ | 9.9 | 10.0 | 9.1 | 10.2 | 8.9 |

Example 6

The synthesis of low sodium, small crystal ZSM-5 according to the invention is not limited to gel type preparations. This example exemplifies a preparation using an amorphous silica solid, instead of sodium silicate liquid, Q-brand. Gel was not formed during the preparation. An acid alum solution was prepared by mixing 119 parts of $Al_2(SO_4)_3.24H_2O$, 815 parts of NaCl and 5000 parts of $H_2O$. A caustic solution was prepared by mixing together 122 parts of NaOH, 825 parts of NaCl, 20 parts of Daxad 27

(sodium alkylbenzene sulfonate combined with an inert inorganic suspending agent) and 5000 parts of $H_2O$. These two solutions were charged into an autoclave at the same time. 2129 parts of Hi-Sil were then added and mixed into this solution. A pre-mixed organic solution of 575 parts of n-propylamine, 199 parts of n-propyl bromide and 383 parts of 2-butanone was also added. The whole mixture was heated at 93°C (200°F) and agitated. The crystallinity of the product was 85% ZSM-5 after 209 hours. The product had a crystal size of <0.05 micron and had a low sodium level after water washing.

Example 7

Gel preparation

Silicate and acid alum solutions were first prepared and nozzle-mixed using conventional quantities and procedures.

Silicate solution

27.7 parts of Q-brand sodium silicate (28.7% $SiO_2$, 8.9% $Na_2O$)
16.0 parts of water
0.08 part of Daxad 27

Acid alum solution

1.0 part of aluminum sulphate
2.4 parts of sulphuric acid (93.2%)
1.2 parts of sodium chloride
16.4 parts of water

Salt added after nozzle mixing

3.9 parts of sodium chloride

The gel was brought up to 93°C (200°F) with maximum agitation.

Organics addition

Cold n-propyl bromide and methyl ethyl ketone were first added to the quiescent gel layer in the crystallizer followed by cold n-propyl amine. The quantities were

.08 part of n-propyl bromide
.09 part of 2-butanone
.23 part of n-propyl amine

The temperature of the organics layer was raised by stirring first at 3 rpm and subsequently at 10—20 rpm, to increase the heating rate. After six hours, the agitator speed was raised to 90 rpm.

Crystallization time

Samples were tested for crystallinity by X-ray diffraction as follows during the course of the crystallization.

| Temp. °C | Crystallization Time, Hrs. | Crystallinity, % |
|---|---|---|
| 93 | 95 | <40 |
| 96 | 112 | <40 |
| 98 | 120 | 50 |
| 99 | 128 | 75 |
| 99 | 136 | 80 |
| 157 | 145 | 100 |

Decant washing

The ZSM-5 settled in little over one hour and decant washing time was subsequently short. A sodium content of 0.07% wt. in the zeolite was achieved after 5 decant washings. To facilitate lowering the sodium content to less than about 0.05 wt. %, 0.65 parts of ammonium nitrate were added to the decant vessel to accelerate the sodium removal from the zeolite. This operation reduced the sodium content to 0.02% wt.

The X-ray pattern of this ZSM-5 was determined to be essentially identical to that of Example 3. The crystallinity was 105% based on Example 3. The sodium content was 0.02% wt and the crystallite size about 0.05 micron.

**Claims**

1. A method for synthesis of zeolite ZSM-5 having a sodium content of 0.01 to 0.20% by weight which comprises preparing a mixture containing sources of an alkali metal oxide, of an aluminum oxide, of a silicon oxide, a $C_1$—$C_6$ primary alkylamine, a $C_1$—$C_8$ alkyl halide and a solvent for amine and halide, the mole ratio of amine to halide being from 2:1 to 10:1 said mixture having a composition, in mole ratios, within the following ranges:

| | |
|---|---|
| $SiO_2/Al_2O_3$ | 5—1000 |
| $H_2O/SiO_2$ | 5—200 |
| $M/SiO_2$ | 0.01—3.0 |
| $R/SiO_2$ | 0.01—2.0 |

wherein R is alkyl from both amine and halide and M is an alkali metal or an alkaline earth cation, and reacting at from 38°C (100°F) to 204°C (400°F).

2. A method according to claim 1 wherein the alkyls of the amine and halide are different.

3. A method according to claim 1 wherein the alkyls of both amine and halide are propyl.

4. A method according to any preceding claim wherein the solvent is 2-butanone.

5. A method according to any preceding claim wherein the duration of synthesis is from 3 hours to 180 days.

**Patentansprüche**

1. Verfahren zur Synthese von Zeolith ZSM-5 mit einem Natriumgehalt von 0,01 bis 0,20 Gew.-%, dadurch gekennzeichnet, daß man ein Gemisch, enthaltend Ausgangsquellen eines Alkalimetalloxids, eines Aluminiumoxids, eines Siliciumoxids, ein $C_1$—$C_6$-primäres Alkylamin, ein $C_1$—$C_6$-Alkylhalogenid und ein Lösungsmittel für Amin und Halogenid, herstellt, wobei das Molverhältnis von Amin zu Halogenid einen Wert von 2:1 bis 10:1 hat und das Gemisch eine Zusammensetzung (in Molverhältnissen) innerhalb der folgenden Bereiche aufweist:

| | |
|---|---|
| $SiO_2/Al_2O_3$ | 5—1000 |
| $H_2O/SiO_2$ | 5—200 |
| $M/SiO_2$ | 0,01—3,0 |
| $R/SiO_2$ | 0,01—2,0 |

worin R Alkyl sowohl vom Amin als auch vom Halogenid ist und M ein Alkalimetall- oder ein Erdalkalmetall-Kation ist, und daß man die Umsetzung bei 38 bis 204°C ausführt.

2. Verfahren nach Anspruch 1, dadurch gekennzeichnet, daß die Alkylgruppen vom Amin und vom Halogenid unterschiedlich sind.

3. Verfahren nach Anspruch 1, dadurch gekennzeichnet, daß die Alkylgruppen sowohl vom Amin als auch vom Halogenid Propyl sind.

4. Verfahren nach einem der vorhergehenden Ansprüche, dadurch gekennzeichnet, daß das Lösungsmittel 2-Butanon ist.

5. Verfahren nach einem der vorhergehenden Ansprüche, dadurch gekennzeichnet, daß die Synthesedauer von 3 h bis 180 Tagen geht.

**Revendications**

1. Procédé pour la synthèse de zéolite ZSM-5 ayant une teneur en sodium de 0,01 à 0,20% en poids, qui consiste à préparer un mélange contenant des sources d'un oxyde de métal alcalin, d'un oxyde d'aluminium, d'un oxyde de silicium, une alkylamine primaire en $C_1$—$C_6$, un halogénure d'alkyle en $C_1$—$C_6$ et un solvant de l'amine et de l'halogénure, le rapport molaire de l'amine à l'halogénure étant de 2:1 à 10:1, ledit mélange ayant une composition, en rapport molaire, dans les gammes suivantes:

| | |
|---|---|
| $SiO_2/Al_2O_3$ | 5—1,000 |
| $H_2O/SiO_2$ | 5—200 |
| $M/SiO_2$ | 0,01—3,0 |
| $R/SiO_2$ | 0,01—2,0 |

où R est le reste alkyle à la fois de l'amine et de l'halogénure et M est un cation de métal alcalin ou de métal alcalino-terreux et à faire réagir à une température de 38°C (100°F) à 204°C (400°F).

2. Procédé selon la revendication 1, dans lequel les restes alkyles de l'amine et de l'halogénure sont différents.

3. Procédé selon la revendication 1, dans lequel les restes alkyles de l'amine et de l'halogénure sont tous deux des restes propyles.

4. Procédé selon l'une quelconque des revendications précédentes, dans lequel le solvant est la 2-butanone.

5. Procédé selon l'une quelconque des revendications précédentes, dans lequel la durée de la synthèse est de 3 h à 180 jours.